# EUROPÄISCHE PATENTANMELDUNG

(11) **EP 0 992 826 A2**
(43) Veröffentlichungstag der Anmeldung: **12.04.2000**
(21) Anmeldenummer: 99119555.3
(22) Anmeldetag: 01.10.1999
(51) Int. Cl.: G02B 6/44

(54) **Abspannbares Kabel zur Verlegung in einem Kanal- oder Rohrsystem**

(30) Priorität: 09.10.1998 DE 19846661
(71) Anmelder: SIEMENS AKTIENGESELLSCHAFT, 80333 München (DE)
(72) Erfinder: Dotzer, Peter, 82335 Berg (DE); Mayr, Ernst, 82319 Starnberg (DE); Müller, Thomas, 96515 Sonneberg (DE)

(57) **Zusammenfassung**

Das in einem Abwasserkanal abspannbare Nachrichtenkabel kann insbesondere aus einem optische Übertragungselemente (LWL-Fasern 8) enthaltenden Zentralrohr (Maxibündel 6), einer die Zugkräfte aufnehmenden Stahldrahtbewehrung (4) und einem mit flügelähnlichen Elementen (24) versehenen PE-Mantel (22) bestehen. Die an der Decke des Abwasserkanals angeklebten Flügelelemente (24) verhindern, daß sich Schmutz in dem zwischen der Kanaldecke und dem Kabelkörper vorhandenen Raum ansammelt oder ablagert.

## Beschreibung

In der DE 29 700 912 U1 wird vorgeschlagen, ein optische Übertragungselemente enthaltendes Nachrichtenkabel in einem Abwasserkanal zu verlegen. Die Montage des Nachrichtenkabels im Abwasserrohr erfolgt hierbei mittels offener oder geschlossener, sich an der Rohrwand abstützender Edelstahlringe, welche jeweils strömungstechnisch optimierte Kabelhalterungs-/-führungselemente aufweisen. Das Einbringen der Edelstahlringe in das Abwasserrohr erfordern allerdings einen hohen Aufwand an Personal und Zeit, was diese an sich kostengünstige Verlegetechnik (keine Grabungsarbeiten) deutlich verteuert.

Aufgabe der Erfindung ist die Schaffung eines Kabels, das sich in einfacher Weise in einem Kanal- oder Rohrsystem verlegen läßt. Diese Aufgabe wird durch ein die Merkmale des unabhängigen Patentanspruchs 1 aufweisendes Kabel gelöst. Die abhängigen Ansprüche betreffen vorteilhafte Weiterbildungen und Ausgestaltungen des Kabels.

Das insbesondere in einem Abwasserkanal oder -rohr abspannbare Kabel weist einen Mantel, eines oder mehrere optische Übertragungselemente (Lichtwellenleiter-Fasern oder LWL-Adern), gegebenenfalls mehrere, der Stromversorgung dienende elektrische Leiter sowie mindestens ein zugfestes Element auf. Bei dem(n) die Zugspannung aufnehmenden Element(en) kann es sich beispielsweise um ein Spannseil oder ein Bündel von Spanndrähten handeln, welche die optischen Übertragungselemente nach Art einer Bewehrung umgeben. Weiterhin können die Spannseile/Spanndrähte und die optischen Übertragungselemente räumlich getrennt voneinander innerhalb eines gemeinsamen Kabelmantels angeordnet sein. Das Kabel läßt sich in einfacher Weise ohne Verwendung zusätzlicher Befestigungs- oder Halteelemente mit einem die Zugkraft aufnehmenden Spannseil verbinden, indem man den Kabelmantel mit einer dem Spannseilquerschnitt angepaßten Aussparung versieht, das Spannseil in diese Aussparung eindrückt und dadurch fixiert. Vorteilhafterweise sind das Kabel und/oder das Spannseil noch mit einem im Mantel angeordneten oder an diesem befestigten Nagetierschutz ausgestattet. Die gegebenenfalls miteinander verseilten Übertragungselemente des Kabels sind vorzugsweise in einem Zentralrohr angeordnet oder werden nachträglich in parallel zur Kabellängsachse verlaufende Kanäle/Bohrungen des Kabelmantels eingeblasen. Das Kabel kann darüber hinaus noch zwei mit dem Mantel verbundene, flügelähnliche Elemente zur Abweisung von Schmutz versehen sein.

Weitere Vorteile und Merkmale der Erfindung ergeben sich aus der folgenden Beschreibung bevorzugter, in den Zeichnungen dargestellter Ausführungsbeispiele. Es zeigen:
- Fig.1: ein drahtbewehrtes Kabel mit einem die optischen Übertragungselemente aufnehmenden Zentralrohr 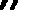 Maxibündel");
- Fig.2: das Kabel gemäß Fig. 1 , dessen Drahtbewehrung isolierte Kupferdrähte enthält;
- Fig.3-5: Ausführungsbeispiele sog. Figur-8-Kabel;
- Fig.6: ein mit flügelähnlichen Elementen (Schmutzabweiser) ausgestattetes Kabel gemäß Fig. 1 oder 2;
- Fig.7: das in einem Abwasserkanal angeordnete Kabel gemäß Fig. 6;
- Fig.8-11: mit Spann- oder Halteseilen versehene Kabel;
- Fig.12/1: 3 Ausführungsbeispiele dielektrischer Abspannkabel; und
- Fig. 14/15: kabelähnliche Ausführungsformen.

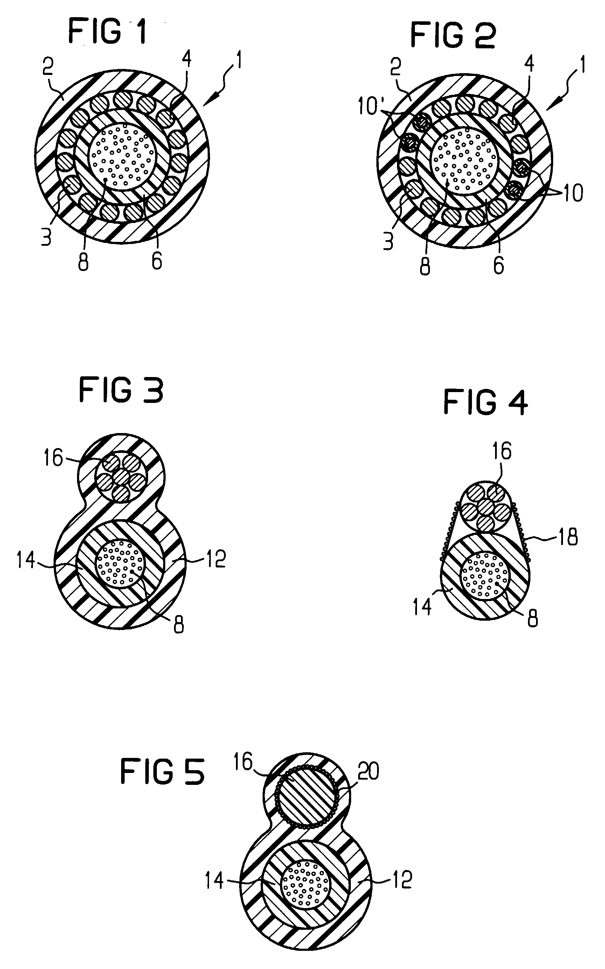

Das in Fig. 1 im Querschnitt dargestellte Kabel 1 besteht aus einem PE(Polyethylen)- oder PP(Polypropylen)-Außenmantel 2, einer einlagigen Stahldrahtbewehrung 4, einem aus Stahl, Edelstahl, Aluminium oder Kunststoff gefertigten Zentralrohr 6 ( 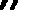 Maxibündel") und den lose im Zentralrohr 6 angeordneten oder in eine thixotrope Hasse eingebetteten, typischerweise N = 2 - 14 LWL-Fasern 8. Auch die zwischen den Stahldrähten 3 der Bewehrung 4 vorhandenen Zwischenräume sind mit einer wasserabweisenden Masse, vorzugsweise Opanol, gefüllt. Zur Befestigung des Kabels 1 im Kanal wird dessen Außenmantel 2 am Kabelende entfernt, die Bewehrung 4 mit den aus dem Freileitungsbau bekannten Abspannelementen (Abspannspirale usw.) verbunden und unter Zugspannung gesetzt.

Bei dem in Fig. 2 dargestellten Ausführungsbeispiel sind zwei gegenüberliegende Drahtpaare der Bewehrung 4 jeweils durch zwei der Stromübertragung dienende, isolierte Kupferdrähte 10/10' ersetzt. Soll die Bewehrung 4 zur Stromübertragung eingesetzt werden, muß man beispielsweise zwischen jeweils der Hälfte der Stahldrähte 3 zwei elektrisch isolierende Elemente, insbesondere Epoxidelemente, anordnen. Diese Lösung ist nur dann sinnvoll, wenn das Zentralrohr 6 aus Kunststoff besteht.

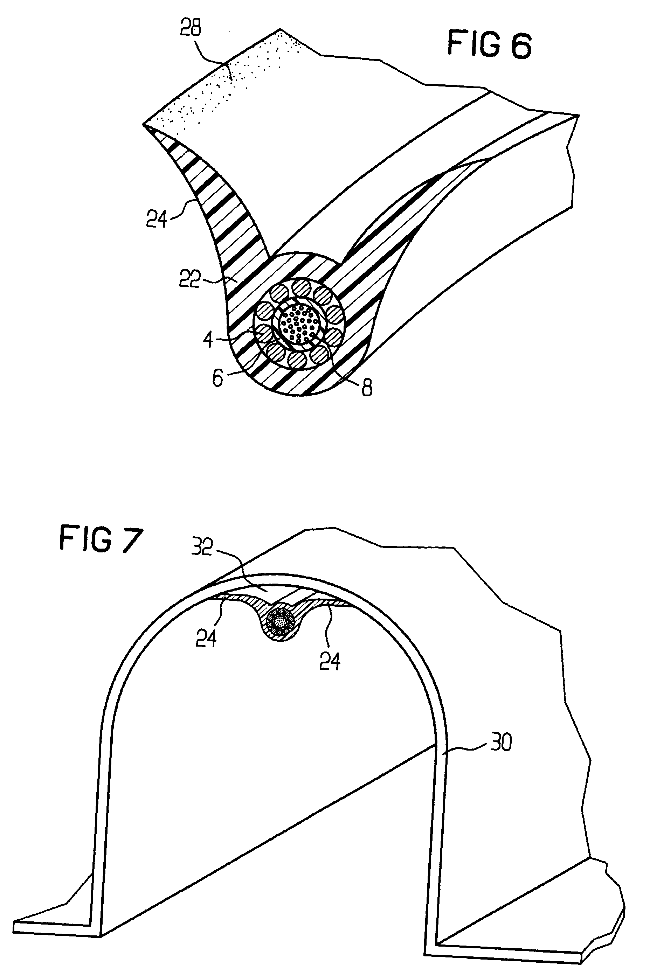

Die Fig. 3 - 5 zeigen Ausführungsbeispiele sog. Figur-8-Kabel, welche jeweils ein die LWL-Fasern 8 schützendes Zentralrohr 14 und ein die Zugkräfte aufnehmendes Spannseil 16 aufweisen. Bei dem in Fig. 3 dargestellten Kabel sind das aus verseilten Stahldrähten bestehende Spannseil 16 und das Zentralrohr 14 durch einen vorzugsweise aus PE gefertigten Mantel 12 mechanisch miteinander verbunden. Es ist selbstverständlich auch möglich, ein aus Edelstahl bestehendes Zentralrohr 14 mittels Drahtkreuzwickeln 18 am Spannseil 16 zu befestigen (siehe Fig. 4). Die in Fig. 5 gezeigte Ausführungsform besitzt ein aus einem dielektrischen Material bestehenden und von einem Stahl-Rillenmantel 20 geschütztes Spannseil 16. Der Mantel 12 umhüllt wieder sowohl das Zentralrohr 14 als auch das beispielsweise aus glasfaserverstärktem Kunststoff gefertigte Spannseil 16.

Entsprechend den in den Fig.1/2 dargestellten Ausführungsbeispielen weist das in den Fig. 6/7 gezeigte Kabel wieder ein aus Stahl, Edelstahl, Aluminium oder Kunststoff gefertigtes Zentralrohr 6 ( 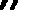 Maxibündelt"),darin lose angeordnete oder in eine thixotrope Masse eingebettete LWL-Fasern 8, eine das Zentralrohr 6 umfassende, der Aufnahme der Zugkräfte dienende Drahtbewehrung 4 und einen PE-Außenmantel 22 auf. Zusätzlich sind noch flügelähnliche Elemente 24 an den die Bewehrung 4 ringförmig umschließenden Außenmantel 22 angeformt. Diese nach oben auseinanderstrebenden und zu ihrem Enden hin jeweils spitz zulaufenden Elemente 24 verhindern, daß sich Schmutz und Unrat in dem zwischen dem Kabelkörper und der Kanaldecke vorhandenen, beispielsweise zur Verlegung von Stromversorgungsleitungen genutzten Raum 32, trotz des unvermeidlichen Durchhangs des abgespannten Kabels, ansammelt oder ablagert. Das Kabel kann man beispielsweise mit Hilfe eines Klebers 28 an der gewölbten Decke des Abwasserkanals 30 befestigen, um den von der Kanaldecke, dem Kabelkörper und den Flügelelementen 24 begrenzten Raum 32 auf der gesamten Abspannstrecke abzudichten und weitgehend sauber zu halten.

Es ist selbstverständlich auch möglich, ein Stahlseil entsprechend zu ummanteln, dieses im Kanal abzuspannen und LWL-Fasern oder LWL-Adern in dem zwischen den Flügelelementen, dem Stahlseil und der Kanaldecke vorhandenen Raum anzuordnen oder sie dort nachträglich einzublasen.

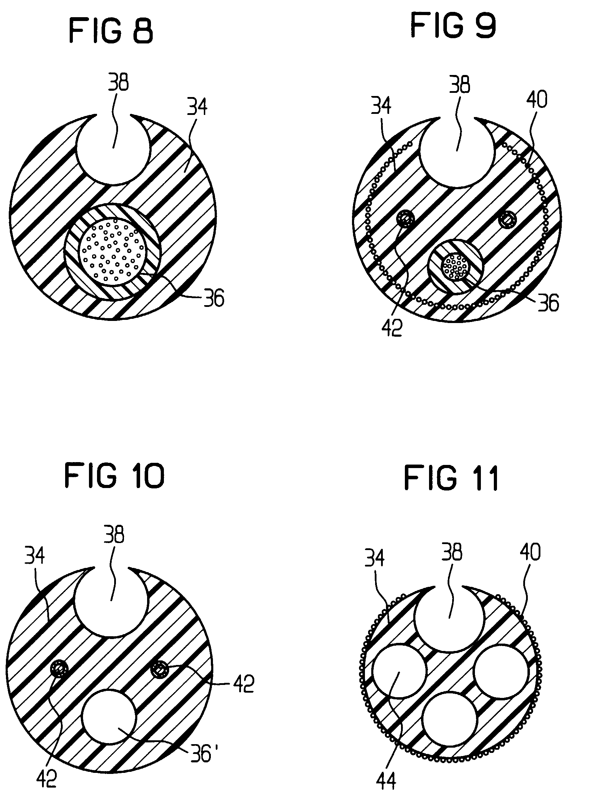

Die Fig. 8 bis 11 zeigen jeweils Ausführungsbeispiele von Kabeln zur Befestigung an einem bereits im Abwasserkanal abgespannten Halteseil. Allen Kabeln gemeinsam ist ein zylindrisches, als Mantel dienendes Element 34, welches eine dem Durchmesser des Halteseils angepaßte, randseitig offene und im Querschnitt kreisförmige Ausnehmung 38 aufweist. Wie in den Fig. 8 und 9 gezeigt, können in dem beispielsweise aus HDPE oder PP gefertigten Element 34 unterschiedlich große, die LWL-Fasern aufnehmende Maxibündeladern 36, der Stromübertragung dienenden Kupferadern 42 sowie ein Stahl-Rillernmantel 40 (Nagetierschutz) angeordnet bzw. in das Element 34 eingebettet sein. Zur Montage des Kabels an dem bereits im Kanal abgespannten Halte- oder Führungsseil wird es zunächst in seiner ganzen Länge im Kanal ausgelegt, dem Halte- oder Führungsseil angenähert und schließlich durch Eindrücken des Halte- oder Führungsseils in die Aussparung 38 an diesem fixiert.

Es ist selbstverständlich auch möglich, ein vorab nur mit Kupferadern 42 versehenes Element 34 (siehe Fig. 10) am bereits abgespannten Halteseil zu befestigen und die LWL-Fasern nachträglich in die zylindrische, parallel zur Längsachse des Elements 34 verlaufende Bohrung 36' mittels Druckluft einzublasen.

Die Fig. 11 zeigt ein mit einem Nagetierschutz 40 ausgestattetes und mit einer Ausnehmung 38 versehenes Element 34, das mehrere, nicht notwendigerweise durchmessergleiche und jeweils parallel zur Längsachse des HDPE- oder PP-Elements 34 verlaufende Kanäle/Bohrungen 44 zum Einblasen von LWL-Fasern aufweist.

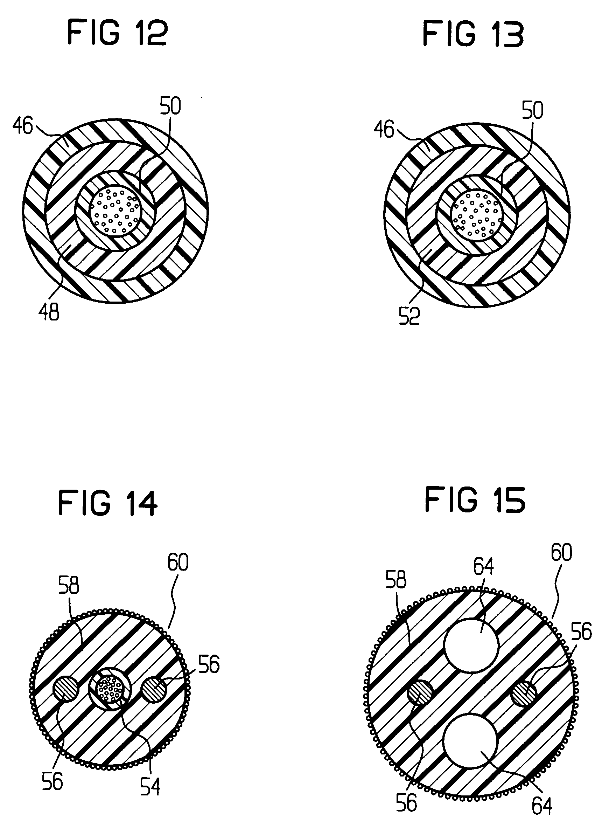

Die in den Fig. 12 und 13 dargestellten dielektrischen Kabel lassen sich direkt in Kanalanlagen abspannen, benötigen also keine Stahlseile als Halteelemente. So weist das in Fig. 12 im Querschnitt gezeigte Kabel beispielsweise einen HDPE- oder PP-Außenmantel 46 und einen vorzugsweise aus einem glasfaserverstärkten Kunststoff (GFK/Epoxid) bestehenden Innenmantel 48 auf, wobei der als zugspannungsfestes Element dienende Innenmantel 48 eine zentral angeordnete LWL-Bündelader 50 oder eine aus verseilten LWL-Adern bestehende, nicht notwendigerweise ummantelte Kabelseele umschließt. Während der Außenmantel 46 des Kabels gemäß Fig. 13 ebenfalls aus HDPE oder PP gefertigt ist, besteht der die LWL-Bündelader 50 umgebende Innenmantel 52 aus einem harten Polyamid, insbesondere PA T12. In das Polyamid eingebettete Glas- oder Kevlargarne gewährleisten die Zugfestigkeit des Innenmantels 52.

Den in den Fig. 14 und 15 dargestellten Ausführungsbeispielen gemeinsam ist wieder ein vorzugsweise aus HDPE gefertigter, zylindrischer Körper 58 mit darin eingebetteten, die Zugkräfte aufnehmenden Stahldrähten 56, sowie der als Nagetierschutz dienende Edelstahl- oder Stahlrillenmantel 60. Beim Ausführungsbeispiel gemäß Fig. 14 sind die LWL-Fasern in einem Zentralrohr 54 (Maxibündel) oder einer axial verlaufenden Bohrung des Körpers 58 angeordnet. Demgegenüber enthält der Körper 58 des in Fig. 15 dargestellten Ausführungsbeispiels zwei sich parallel zur Körperlängsachse erstreckende Kanäle 64, in die man die LWL-Fasern nachträglich einbläst. Die primär der Aufnahme der Zugkräfte dienenden Stahldrähte lassen sich selbstverständlich auch zur Stromversorgung einsetzten. Anstelle der Kanäle 64 können auch umspritzte Zentralrohre vorgesehen sein.

## Patentansprüche

1. Abspannbares Kabel zur Verlegung in einem Kanal- oder Rohrsystem , wobei das Kabel einen Mantel (2, 12, 22, 34, 46, 58) und zumindest ein optisches Übertragungselement (8, 14, 36, 50, 54, 64) aufweist,
**dadurch gekennzeichnet**,
daß es zumindest ein zugfestes Element enthält.

2. Kabel nach Anspruch 1,
**dadurch gekennzeichnet**,
daß das zugfeste Element als Spannseil oder Spanndraht (4, 16) ausgebildet ist.

3. Kabel nach Anspruch 1 oder 2,
**dadurch gekennzeichnet**,
daß das zugfeste Element (4, 16), und das optische Übertragungselement (8) räumlich getrennt innerhalb des Mantels (12) angeordnet sind.

4. Kabel nach Anspruch 1 oder 2,
**dadurch gekennzeichnet**,
daß der Mantel (34) eine dem Querschnitt des zugfesten Elements angepaßte Ausnehmung (38) aufweist.

5. Kabel nach Anspruch 1,
**dadurch gekennzeichnet**,
daß es einen Außenmantel (46) und einen zugfesten Innenmantel (48, 52) aufweist.

6. Kabel nach einem der vorhergehenden Ansprüche,
**dadurch gekennzeichnet**,
daß es mit einem auf dem Mantel (2, 12, 22, 34, 46, 58) oder im Mantel angeordneten Nagetierschutz (20, 40, 60) versehen ist.

7. Kabel nach einem der vorhergehenden Ansprüche,
**dadurch gekennzeichnet**,
daß die optischen Übertragungselemente (8, 14, 36, 50, 54, 64) (8) in einem Zentralrohr (6, 14, 54) oder innerhalb des zugfesten Innenmantels (48, 52) angeordnet sind.

8. Kabel nach einem der vorhergehenden Ansprüche,
**dadurch gekennzeichnet**,
daß es mit schmutzabweisenden Elementen(24) versehen ist.

9. Kabel nach einem der vorhergehenden Ansprüche,
**dadurch gekennzeichnet**,
daß es sich bei den optischen Übertragungselementen um Lichtwellenleiterfasern oder -adern handelt.

10. Kabel nach Anspruch 9,
**dadurch gekennzeichnet**,
daß neben den optischen Übertragungselementen auch elektrische Leiter (10, 42) vorgesehen sind.

11. Kabel nach Anspruch 10,
**dadurch gekennzeichnet**,
daß die elektrischen Leiter räumlich getrennt von den optischen Übertragungselementen innerhalb des Mantels angeordnet sind.

12. Kabel nach Anspruch 11,
**dadurch gekennzeichnet**,
daß die elektrischen Leiter im Bereich der Spannseile (4, 16) angeordnet sind.

13. Kabel nach Anspruch 12,
**dadurch gekennzeichnet**,
daß die elektrischen Leiter im Bereich der Schmutzabweiserflügel (24) vorgesehen sind.
